(19) **Europäisches Patentamt**
**European Patent Office**
**Office européen des brevets**

(11) **EP 1 647 799 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
*G01B 11/02* (2006.01)   *G01B 11/24* (2006.01)
*G01B 11/30* (2006.01)   *G01B 21/04* (2006.01)
*G02B 21/00* (2006.01)

(21) Anmeldenummer: **05020180.5**

(22) Anmeldetag: **16.09.2005**

(54) **Kalibrierung eines Oberflächenmesssystems**

Calibration of a surface measurement system

Calibrage d'un dispositif de mesure de surface

(84) Benannte Vertragsstaaten:
**AT DE FR GB**

(30) Priorität: **12.10.2004 DE 102004049541**

(43) Veröffentlichungstag der Anmeldung:
**19.04.2006 Patentblatt 2006/16**

(73) Patentinhaber: **Precitec Optronik GmbH**
**D-63110 Rodgau (DE)**

(72) Erfinder:
• **Michelt, Berthold**
**65185 Wiesbaden (DE)**

• **Kunkel, Matthias**
**63571 Gelnhausen (DE)**

(74) Vertreter: **Schwanhäusser, Gernot et al**
**Ostertag & Partner**
**Patentanwälte**
**Epplestr. 14**
**70597 Stuttgart (DE)**

(56) Entgegenhaltungen:
WO-A-03/036227          DE-A1- 10 228 477
US-A- 4 585 349          US-B1- 6 327 041

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein nach einem Weißlicht-Meßverfahren arbeitendes Meßsystem, das einen Meßkopf mit einem chromatisch nicht korrigierten Objektiv und eine lösbar mit dem Meßkopf verbindbare Auswerteeinheit umfaßt. Die Auswerteeinheit enthält einen Spektrographen, der ein von dem Meßkopf aufgenommenes optisches Signal spektral analysiert. Die Erfindung betrifft ferner Kalibrierverfahren für ein solches Meßsystem.

Ein Meßsystem dieser Art ist aus einem Aufsatz von C. Dietz und M. Jurca mit dem Titel "Eine Alternative zum Laser", Sensormagazin Nr. 4, 3. November 1997, Seiten 15 bis 18, bekannt.

In vielen Bereichen der Technik, etwa der Qualitätssicherung und Verschleißprüfung in der Luft- und Raumfahrt- oder der Kraftwerkstechnik, stellt sich die Aufgabe, mit Hilfe eines Meßgeräts berührungslos Oberflächen unterschiedlichster Art zu vermessen. Ziel derartiger Messungen ist es dabei im allgemeinen, für eine Vielzahl von Meßpunkten, die entlang einer Linie oder auch über eine Fläche verteilt angeordnet sein können, den Abstand zu einer durch die Lage des Meßgeräts vorgegebenen Referenzebene zu ermitteln. Auf diese Weise erhält man ein zweidimensionales Profil bzw. eine dreidimensionale Topographie der Oberfläche. Werden die gewonnenen Daten auf einem Datensichtgerät dargestellt, so lassen sich z.B. Fertigungs- oder Materialfehler genau erkennen.

Mit optischen Meßgeräten dieser Art können inzwischen Meßgenauigkeiten in der Richtung senkrecht zur Oberfläche von deutlich weniger als einem Mikrometer erzielt werden. Besonders verbreitet sind hierbei triangulatorische Meßverfahren, interferometrische Meßverfahren sowie auf dem Autofokus-Prinzip beruhende Meßverfahren, wie sie in ähnlicher Weise von CD-Spielern her bekannt sind.

Das aus dem vorstehend genannten Aufsatz bekannte Meßsystem ermöglicht eine besonders genaue Oberflächenvermessung bei gleichzeitig sehr kompakter Bauweise. Bei dem bekannten Meßsystem wird von einer Halogen- oder Xenonlampe erzeugtes weißes Licht über eine Glasfaser zu einem Meßkopf geführt. Der Meßkopf enthält ein Objektiv mit starker chromatischer Aberration, welches das objektivseitige Ende der Glasfaser in kurzer Entfernung verkleinert abbildet. Infolge der chromatischen Aberration ergibt sich eine wellenlängenabhängige Brennweite für diese Abbildung.

Befindet sich eine optische Grenzfläche in dem Brennweitenbereich des Objektivs, so erzeugt aufgrund der wellenlängenabhängigen Brennweite des Objektivs nur Licht einer ganz bestimmten Wellenlänge einen scharfen Brennpunkt auf dieser Grenzfläche. Umgekehrt wird nur der Reflex des Lichts dieser Wellenlänge wieder scharf auf das Faserende abgebildet und in die Faser eingekoppelt. Am geräteseitigen Ende der Faser wird das zurücklaufende Licht ausgekoppelt und in einem Spektrographen analysiert. Jedes lokale Maximum der spektralen Intensitätsverteilung entspricht einer rückstreuenden optischen Grenzfläche.

Wird nur der Reflex durch die dem Meßkopf am nächsten liegende Grenzfläche ausgewertet, so läßt sich daraus der Abstand zwischen dem Meßkopf und der Grenzfläche ableiten. Wird zusätzlich auch die darauffolgende Grenzfläche in die Auswertung mit einbezogen, so läßt sich die Dicke einer transparenten Schicht oder eines transparenten Körpers bestimmen. Die Dicke der Schicht oder des Körpers ergibt sich dabei als Differenz der gemessenen Abstände für die obere und die untere Grenzfläche. Bei den zu vermessenden Körpern kann es sich z.B. um Glasscheiben oder dünnwandige Glasrohre handeln, die mit gleichmäßiger Scheibendicke bzw. Wandstärke hergestellt werden sollen. Ein weiteres Anwendungsgebiet für die Dickenmessung transparenter Körper ist die Überprüfung der Flächentreue von Linsen. Der Begriff der Oberflächenvermessung soll deswegen in diesem Zusammenhang auch die Schichtdickenmessung umfassen.

Vorm Grundsatz her wäre es möglich, allein auf der Grundlage exakter Berechnungen zu bestimmen, welche Abstände zwischen dem Meßkopf und der zu vermessenden Oberfläche zu welchen Ausgangssignalen des Spektrographen führen.

Selbst bei größter Sorgfalt dieser Berechnungen ließe sich damit jedoch nur eine vergleichsweise geringe Meßgenauigkeit erzielen, da sich das tatsächliche Verhalten des Meßsystems infolge von Material- und Fertigungstoleranzen von dem idealen Verhalten im allgemeinen unterscheiden wird.

Aus diesem Grunde führt man vor der Inbetriebnahme des Meßsystems eine Kalibrierung durch. Bei dieser Kalibrierung werden in einem speziellen Kalibriermeßstand definierte, durch andere Meßgeräte überprüfe Abstände zwischen dem Meßkopf und einer Referenzfläche Ausgangssignale des Spektrographen zugeordnet. Auf diese Weise erhält man eine Zuordnungstabelle, die in der Auswerteeinheit des Meßsystems hinterlegt werden kann. Ein derartiges Messsystem ist aus US-6327041 bekannt. Anstelle der Zuordnungstabelle kann auch eine Funktion in der Auswerteeinheit hinterlegt werden, die durch Interpolation eine kontinuierliche Zuordnung von Meßwerten des Spektrographen zu Abständen ermöglicht.

Aufgabe der Erfindung ist es, ein flexibler einsetzbares Kalibrierverfahren für ein derartiges Meßsystem anzugeben.

Aufgabe der Erfindung ist es ferner, ein Meßsystem anzugeben, das für die Durchführung eines solchen Kalibrierverfahrens geeignet ist.

Bei einem Kalibrierverfahren der eingangs genannten Art wird die gestellte Aufgabe dadurch gelöst, daß der Meßkopf und der Spektrograph getrennt voneinander kalibriert werden.

Auf diese Weise sind zwar gegenüber dem bekannten Kalibrierverfahren zwei Kalibriervorgänge, nämlich einer für den Meßkopf und einer für den Spektrographen, erforderlich. Dafür jedoch erlaubt es das erfindungsgemäße Kalibrierverfahren, auch solche Meßköpfe und Auswerteeinheiten in einem Meßsystem zu betreiben, die nicht vorher gemeinsam kalibriert wurden.

Bedeutung kann dies insbesondere dann erlangen, wenn ein Meßkopf gegen einen anderen Meßkopf ausgetauscht werden soll. Veranlaßt sein kann ein solcher Austausch nicht nur bei einem Defekt eines Meßkopfs, sondern beispielsweise auch dann, wenn mit einem zusätzlichen Meßkopf ein anderer Meßbereich erschlossen werden soll. Die Meßköpfe liefern nämlich im allgemeinen nur für einen bestimmten Meßbereich hochgenaue Meßergebnisse. Wollte bislang ein Nutzer einen weiteren Meßbereich erschließen, so wurde im allgemeinen die Auswerteeinheit mit dem darin enthaltenen Spektrographen zu einem Kalibriermeßstand des Herstellers transportiert, was zu hohen Transport- und Ausfallkosten führte. Auf dem Kalibriermeßstand wurde die Auswerteeinheit dann gemeinsam mit dem neuen Meßkopf kalibriert.

Da bei dem erfindungsgemäßen Kalibrierverfahren jedoch eine gemeinsame Kalibrierung nicht mehr erforderlich ist, genügt es, den neuen Meßkopf zusammen mit Kalibrierdaten, die während der Kalibrierung des Meßkopfs ermittelt wurden, zur Auswerteeinheit zu transportieren. Auf der Grundlage der zugeführten Kalibrierdaten kann das Meßsystem mit dem neuen Meßkopf dann wieder hochgenaue Messungen vornehmen, und zwar jetzt in dem Meßbereich, für den der neue Meßkopf ausgelegt ist.

Um schließlich in der Auswerteeinheit auf der Grundlage der Ausgangssignale des Spektrographen auf die von dem Meßkopf erfaßten Abstände zurückschließen zu können, werden vorzugsweise bei der Kalibrierung des Meßkopfes Abstände zwischen dem Meßkopf und einer Referenzfläche ersten Bezugsgrößen zugeordnet. Bei der Kalibrierung des Spektrographen werden Ausgangssignale des Spektrographen zweiten Bezugsgrößen zugeordnet. Die Zuordnung der Abstände und der Ausgangssignale des Spektrographen zu den ersten bzw. zweiten Bezugsgrößen muß dabei jeweils eindeutig sein. Dies bedeutet, daß jedem Abstand genau eine erste Bezugsgröße zugeordnet ist und umgekehrt.

Falls die ersten Bezugsgrößen über eine Funktion oder eine weitere Zuordnungstabelle eindeutig den zweiten Bezugsgrößen zugeordnet sind, so kann in der Auswerteeinheit über die funktional verknüpften Bezugsgrößen ein Zusammenhang zwischen den von dem Meßkopf erfaßten Abständen und den Ausgangssignalen des Spektrographen hergestellt werden.

Besonders einfach ist es natürlich, wenn bei der Kalibrierung des Meßkopfes und der Kalibrierung des Spektrographen die gleichen Bezugsgrößen verwendet werden. Bevorzugt ist es in diesem Zusammenhang, als gemeinsame Bezugsgrößen Wellenlängen zu verwenden.

Für den Meßkopf bedeutet dies, daß während der Kalibrierung mit Hilfe eines geeichten Spektrometers die Wellenlänge bestimmt wird, an der bei einem bestimmten Abstand des Meßkopfes von einer Referenzfläche ein Intensitätsmaximum auftritt. Bei der Kalibrierung des Spektrographen wird während der Kalibrierung ermittelt, welche Ausgangssignale vom Spektrographen erzeugt werden, wenn diesem Licht einer bestimmten Wellenlänge zugeführt wird. Über die Wellenlänge kann dann in der Auswerteeinheit eine eindeutige Zuordnung zwischen von dem Meßkopf erfaßten Abständen und den Ausgangssignalen des Spektrographen hergestellt werden.

Im allgemeinen wird es am einfachsten sein, wenn der Auswerteeinheit die bei der Kalibrierung des Meßkopfs ermittelte Zuordnung zwischen Abständen und ersten Bezugsgrößen vor der Inbetriebnahme des Meßsystems übermittelt wird. Wenn die Zuordnung zwischen den zweiten Bezugsgrößen und den Ausgangssignalen des Spektrographen in der Auswerteeinheit gespeichert ist, ist diese in der Lage, vor der Inbetriebnahme des Meßsystems die Ausgangssignale des Spektrographen über die ersten und die zweiten Bezugsgrößen Abständen zuzuordnen.

Alternativ hierzu kann der Auswerteeinheit vor der Inbetriebnahme des Meßsystems eine Zuordnung zwischen Ausgangssignalen des Spektrographen und Abständen übermittelt werden. Das Zusammenführen der beiden Zuordnungen erfolgt in diesem Fall nicht in der Auswerteeinheit, sondern an einem anderen Ort, z.B. einem Rechner des Kalibriermeßstands, in dem der Meßkopf kalibriert wird. Voraussetzung hierfür ist lediglich, daß an diesem Ort die bei der Kalibrierung des Spektrographen gewonnenen Kalibrierdaten zur Verfügung stehen.

Die Auswerteeinheit erhält bei dieser Variante die gleiche Art von Informationen, wie sie bislang bei der gemeinsamen Kalibrierung der Auswerteeinheit zur Verfügung gestellt wurden. Eine in der Auswerteeinheit enthaltene Software kann deshalb im Prinzip unverändert bleiben.

Bei den meisten gängigen Spektrographen wird ein einfallendes Lichtbündel mit Hilfe eines optischen Beugungsgitters oder eines Prismas wellenlängenabhängig in verschiedene Richtungen geworfen. Das gebeugte bzw. gebrochene Licht trifft dann auf optische Sensoren, bei denen es sich z.B. um Pixel eines CCD-Sensors handeln kann. Die Ausgangssignale des Spektrographen bestehen dann in Informationen, an welchem Ort des Sensors während einer Messung ein Intensitätsmaximum auftritt. Über die erste und die zweite Bezugsgröße wird dann ein Zusammenhang zwischen den von dem Meßkopf erfaßten Abständen und den Orten, an denen jeweils ein Intensitätsmaximum auftritt, hergestellt.

Die das Meßsystem betreffende Aufgabe wird bei einem Meßsystem der eingangs genannten Art dadurch gelöst, die Auswerteeinheit ferner enthält:

- einen Dateneingang, über den der Auswerteeinheit eine Zuordnung von Abständen zwischen dem Meßkopf und einer Referenzfläche zu ersten Bezugsgrößen zugeführt werden kann,

- einen Datenspeicher, in dem eine Zuordnung von Orten im Spektrographen, an denen während einer Messung ein Intensitätsmaximum auftreten können, zu zweiten Bezugsgrößen gespeichert ist, und

- eine Recheneinheit, die vor der Inbetriebnahme des Meßsystems die Orte im Spektrographen über die zugeführten ersten und die gespeicherten zweiten Bezugsgrößen Abständen zuordnet.

Weitere Merkmale und Vorteile der Erfindung ergeben sich aus der nachfolgenden Beschreibung eines Ausführungsbeispiels anhand der Zeichnung. Darin zeigen:

Figur 1 eine räumliche Darstellung eines erfindungsgemäßen Meßsystems sowie eines rohrförmigen Meßobjekts;

Figur 2 eine schematische Darstellung wesentlicher Komponenten des erfindungsgemäßen Meßsystems;

Figur 3 eine spektrale Intensitätsverteilung des reflektierten Licht, die in einem Spektrographen des in den Figuren 1 und 2 gezeigten Meßsystems erfaßt wird;

Figur 4 einen schematisch dargestellten Ausschnitt aus einem CCD-Sensor, der Teil des Spektrographen ist;

Figur 5 einen Graphen, in dem qualitativ der funktionale Zusammenhang zwischen dem von dem Meßkopf erfaßten Abstand und der Wellenlänge aufgetragen ist;

Figur 6 einen Graphen, in dem qualitativ die funktionale Abhängigkeit zwischen der Wellenlänge von Pixelorten in dem Spektrographen aufgetragen ist;

Figur 7 einen Graphen, in dem der funktionale Zusammenhang zwischen dem Abstand und dem Pixelort aufgetragen ist.

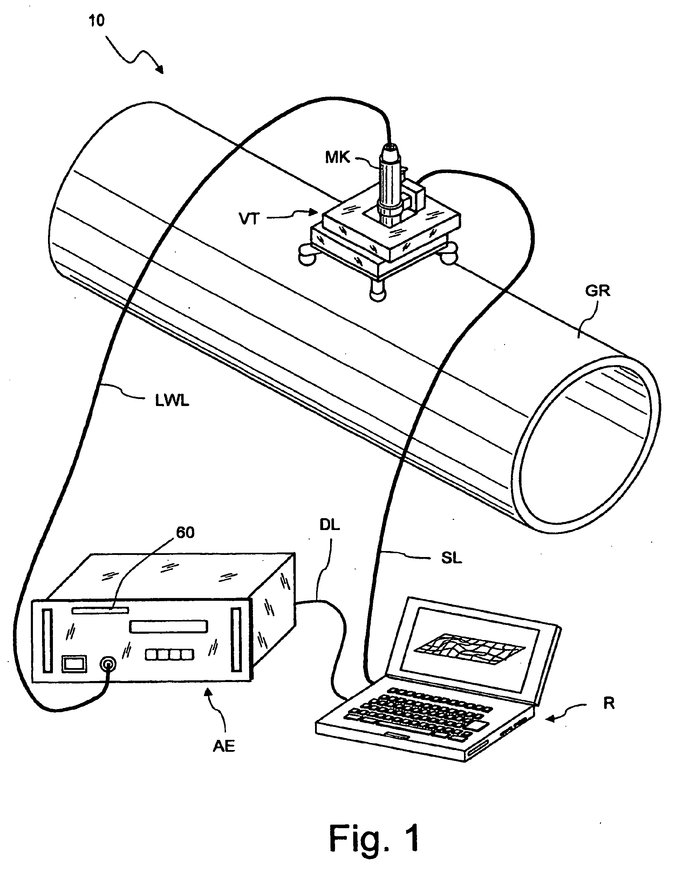

In der Figur 1 ist ein Meßsystem zur berührungslosen Vermessung einer Oberfläche räumlich dargestellt und insgesamt mit 10 bezeichnet. Das Meßsystem 10 umfaßt einen Meßkopf MK, der in einem Meßkopfhalter eines automatischen Verfahrtischs VT aufgenommen ist. Der Verfahrtisch ist auf einem Glasrohr GR aufgestellt, dessen Oberflächenprofil mit Hilfe des Meßsystems 10 erfaßt werden soll. Der Verfahrtisch VT erlaubt es, den Meßkopf MK entlang dessen Längsrichtung exakt zu fixieren sowie in einer Ebene senkrecht dazu mit hoher Genauigkeit zu verfahren.

Der Meßkopf MK ist über einen Lichtwellenleiter LWL mit einer Auswerteeinheit AE verbunden. In dieser werden aus den von dem Meßkopf bereitgestellten optischen Signalen Abstände zwischen dem Meßkopf (oder genauer: einer dem Meßkopf zugeordneten Bezugsfläche) und dem Glasrohr GR ermittelt. Die Auswerteeinheit AE ist über eine Datenleitung DL mit einem externen Rechner R verbunden, der über eine Steuerleitung den Verfahrtisch VT ansteuert. Durch Abtasten der Oberfläche des Glasrohrs GR erstellt der Rechner R ein zweidimensionales Oberflächenprofil, das mit an sich bekannter Software dargestellt und ausgewertet werden kann.

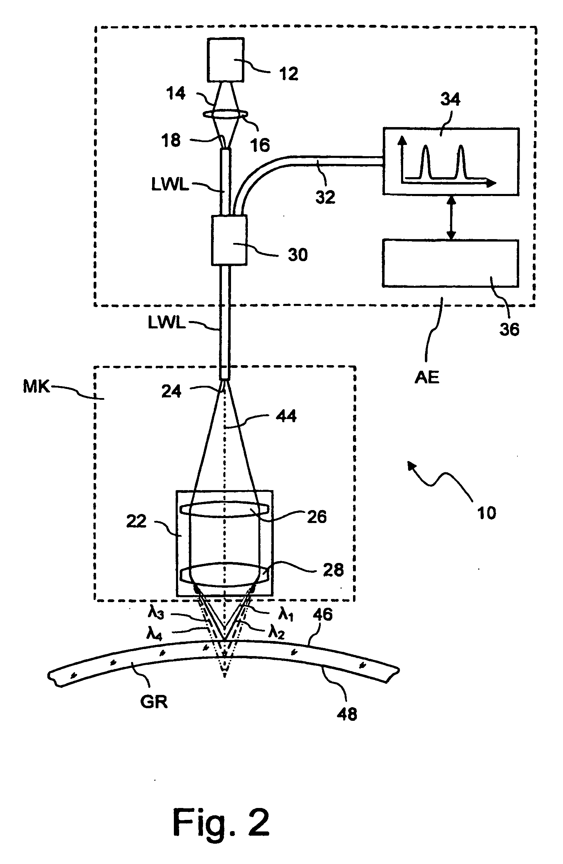

Die Figur 2 zeigt Einzelheiten des Meßsystems 10 in einem stark schematisierten und nicht maßstäblichen Längsschnitt. Die Auswerteeinheit AE enthält eine Lichtquelle, die weißes Licht erzeugt. Darunter versteht man Licht, das aus allen Wellenlängen des sichtbaren Spektralbereichs annähernd energiegleich gemischt ist. Bei geringeren Anforderungen an die Meßgenauigkeit kommt ferner auch eine Lichtquelle in Betracht, deren Emissionsspektrum nur quasikontinuierlich ist. Eine nicht energiegleiche Lichtmischung kann durch geeignete Korrekturmaßnahmen bei der Auswertung berücksichtigt werden. Als Lichtquelle in Betracht kommt beispielsweise eine Xenon- oder Quecksilberdampf-Hochdrucklampe; im dargestellten Ausführungsbeispiel ist die Lichtquelle als Halogenlampe 12 ausgeführt. Deren Licht 14 wird mit Hilfe eines mit 16 angedeuteten Kollimators auf eine Eintrittsfläche 18 des Lichtwellenleiters LWL gebündelt.

Der Meßkopf MK besteht im wesentlichen aus einem Objektiv 22 mit starker chromatischer Aberration, das eine Austrittsfläche 24 des Lichtwellenleiters LWL verkleinert in kurzer Entfernung abbildet. Das Objektiv 22 ist in der Figur 2 nur vereinfacht wiedergegeben und enthält beispielhaft zwei Linsen 26 und 28.

An den Lichtwellenleiter LWL ist über einen Verzweiger 30 und einen weiteren Lichtwellenleiter 32 ein Spektrograph 34 angekoppelt, der mit einer Recheneinheit 36 verbunden ist.

Im folgenden wird die Funktion des Meßsystems 10 beschrieben:

Da das Objektiv 22 eine starke chromatische Aberration aufweist, ist die Brennweite eine monoton steigende oder fallende Funktion der Wellenlänge des hindurchtretenden Lichts 14. In der Figur 2 ist dies in unterschiedlichen Strichelungen schematisch für vier unterschiedliche Wellenlängen $\lambda_1$, $\lambda_2$, $\lambda_3$ und $\lambda_4$ dargestellt. Die in dem Objektiv 22 enthaltenen Linsen haben eine normale Dispersion, so daß kurzwelliges Licht von dem Objektiv 22 stärker gebrochen wird als langwelliges. Die Brennweite des Lichts mit der kürzesten Wellenlänge $\lambda_1$ ist somit am kleinsten, während die Brennweite des Lichts mit der größten Wellenlänge $\lambda_4$ am größten ist. Bei Linsen mit anomaler Dispersion kehren sich die Verhältnisse um.

Wie in der Figur 2 erkennbar ist, liegt bei der gezeigten Lage des Glasrohrs GR bezüglich des Meßkopfes MK der Brennpunkt für Licht mit der Wellenlänge $\lambda_2$ exakt auf der dem Objektiv 22 zugewandten oberen Grenzfläche 46 des Glasrohrs GR. Der durch den Brennpunkt auf der oberen Grenzfläche 46 entstehende Lichtfleck wird zumindest teilweise reflektiert und über das Objektiv 22 zurück auf die Austrittsfläche 24 des Lichtwellenleiters LWL abgebildet.

Entsprechendes gilt auch für Licht der Wellenlänge $\lambda_3$, da der Brennpunkt für Licht dieser Wellenlänge auf einer dem Objektiv 22 abgewandten unteren Grenzfläche 48 liegt und somit ebenfalls zumindest teilweise reflektiert und durch das Objektiv 22 zurück auf die Austrittsfläche 24 abgebildet wird. Das zurück in den Lichtwellenleiter LWL eingekoppelte Licht umfaßt daher im wesentlichen nur die Wellenlängen $\lambda_2$ und, mit geringerer Intensität, $\lambda_3$. Über den Verzweiger 30 wird dieses Licht dem Spektrographen 34 zugeführt und dort spektral analysiert.

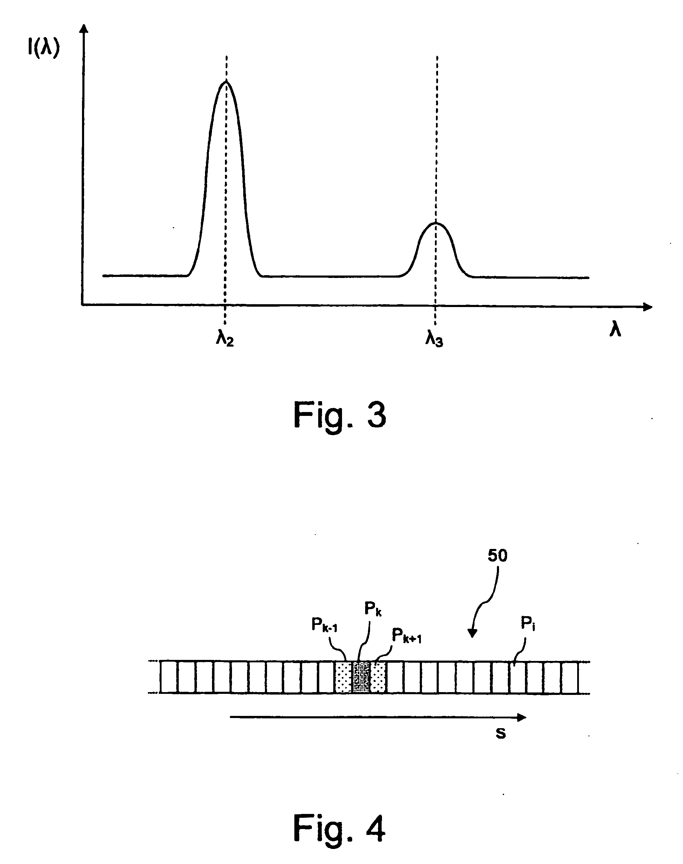

Die Intensitätsverteilung des dem Spektrographen 34 zugeführten Lichts ist in der Figur 3 gezeigt. Darin erkennbar sind zwei lokale Maxima bei den Wellenlängen $\lambda_2$ und $\lambda_3$, die von dem Spektrographen 34 ermittelt und der Recheneinheit 36 zugeführt werden. Die Intensität des Maximums bei der Wellenlänge $\lambda_3$ ist kleiner, da das von der unteren Grenzfläche 48 reflektierte Licht infolge seines zweimaligen Durchtritts durch die Wandung des Glasrohres GR einen Teil seiner Energie durch Absorption verloren hat.

Der Spektrograph 34 liefert allerdings nicht unmittelbar als Ergebnis die in der Figur 3 gezeigte Intensitätsverteilung. Vielmehr übergibt der Spektrograph 34 an die Recheneinheit 36 Daten, an welchen Orten auf einem CCD-Sensor innerhalb des Spektrographen 34 Licht mit welcher Intensität auftrifft.

Zur Erläuterung wird im folgenden auf die Figur 4 Bezug genommen, die in stark vereinfachter Darstellung einen Ausschnitt aus einem insgesamt mit 50 bezeichneten CCD-Sensor zeigt. Der CCD-Sensor 50 umfaßt eine Vielzahl von einzelnen Pixeln $P_i$, welche die Intensität auftreffenden Lichts erfassen. Welche Pixel $P_i$ bei einem gegebenen optischen Ausgangssignal des Meßkopfs MK ausgeleuchtet werden, hängt vom Abstand des Meßkopfs MK von den Grenzflächen 46 und 48 ab. Dies hängt damit zusammen, daß das von dem Meßkopf dem Spektrographen 34 zugeleitete Licht an einem darin enthaltenen Beugungsgitter gebeugt wird. Die Beugungswinkel sind dabei eine Funktion der Wellenlänge des auf das Beugungsgitter auftreffenden Lichts.

Zur Veranschaulichung ist in der Figur 4 angenommen, daß Licht der Wellenlänge $\lambda_2$, an dem sich das erste lokale Intensitätsmaximum befindet, auf den Pixel $P_k$ fällt. Aufgrund der endlichen Breite des Intensitätsmaximums bei der Wellenlänge $\lambda_2$ werden auch die beiden benachbarten Pixel $P_{k-1}$ und $P_{k+1}$ mit geringerer Intensität ausgeleuchtet.

Um jedem Pixel $P_i$ des CCD-Sensors 50 genau eine Wellenlänge zuordnen zu können, wird der Spektrograph 34 zunächst kalibriert.

Dabei wird dem Spektrographen 34 Licht einer durchstimmbaren Wellenlänge zugeführt. Die Wellenlänge wird dabei mit Hilfe eines genauen und geeichten Meßgerätes überwacht. Dann wird anhand der Ausgangssignale des Spektrographen 34 festgestellt, welche Pixel $P_i$ bei den einzelnen Wellenlängen ausgeleuchtet werden. Man erhält im Rahmen dieser Kalibrierung eine Zuordnung von Wellenlängen zu Pixelnummern $P_i$ oder, was äquivalent ist, zu Pixelorten s. Der Einfachheit halber wird im folgenden nur noch von Pixelorten s gesprochen; die Angabe von Pixelnummern $P_i$ oder anderer Größen, die den Pixeln zugeordnet werden können, soll davon mitumfaßt sein. Die während der Kalibrierung gewonnene Zuordnung von Wellenlängen $\lambda$ und Pixelorten s wird in Form einer Tabelle, wie sie nachfolgend ausschnittsweise als Tabelle 1 wiedergegeben ist, in einem Speicher der Recheneinheit 36 der Auswerteeinheit AE gespeichert.

**Tabelle 1**

| Wellenlänge $\lambda$ [nm] | Ort s [$\mu$m] |
|---|---|
| ... | ... |
| $\lambda_{k-1}$ | $S_{k-1}$ |
| $\lambda_k$ | $S_k$ |
| $\lambda_{k+1}$ | $S_{k+1}$ |
| $\lambda_{k+2}$ | $S_{k+2}$ |
| $\lambda_{k+3}$ | $S_{k+3}$ |
| ... | ... |

Anhand der in der Tabelle 1 angegebenen Zuordnung ist die Recheneinheit 36 nun in der Lage, aufgrund ihr zugeführter Ausgangssignale, die den Pixelort s enthalten, auf die Wellenlänge zurückzuschließen, an der die Intensität ein lokales Maximum hat. Allein aufgrund dieser Information kann allerdings noch nicht der Abstand zwischen dem Meßkopf MK und einer der Grenzflächen 46, 48 ermittelt werden.

Deswegen enthält die Recheneinheit 36 eine weitere Zuordnungstabelle, die durch Kalibrierung des Meßkopfs MK erstellt wird. Bei dieser Kalibrierung wird der Meßkopf MK in unterschiedlichen Abständen $d_i$ zu einer Referenzfläche positioniert, wobei der Abstand $d_i$ mit Hilfe eines externen geeichten Meßgeräts mit hoher Genauigkeit erfaßt wird. Mit Hilfe eines ebenfalls geeichten Spektrographen wird dann ermittelt, bei welcher Wel-

lenlänge $\lambda_i$ das optische Ausgangssignal des Meßkopfs MK bei einem gegebenen Abstand $d_i$ ihr Intensitätsmaximum hat. Die Struktur einer solchen Zuordnungstabelle ist ausschnittsweise als Tabelle 2 wiedergegeben.

Ist auch diese zweite Zuordnungstabelle in der Recheneinheit 36 gespeichert, so kann diese über die Wellenlänge den von dem Spektrographen 34 ausgegebenen Pixelorten s eindeutig Abstände $d_i$ zuordnen. Soll mit Hilfe des Meßsystems 10 die Dicke des Glasrohrs GR ermittelt werden, so ergibt sich diese in einfacher Weise durch die Differenz der Abstände, die zu der unteren Grenzfläche 48 und zu der oberen Grenzfläche 46 ermittelt wurden.

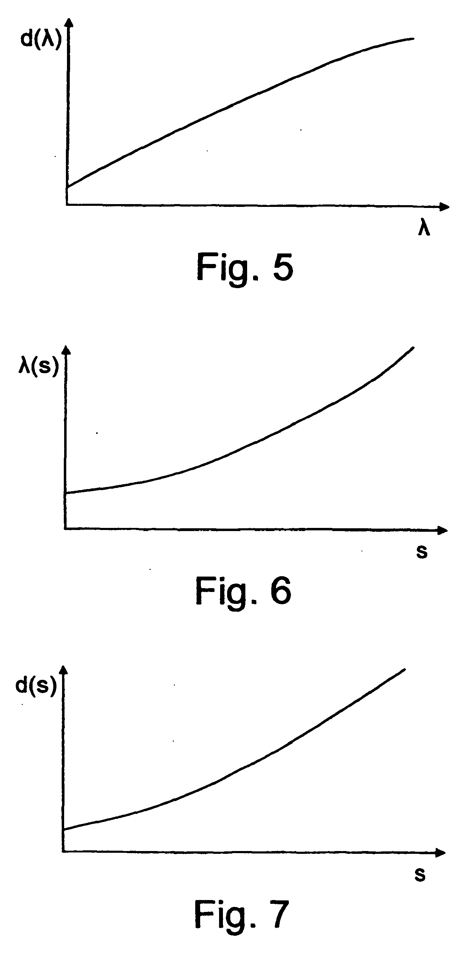

In der Recheneinheit 36 können anstelle von Zuordnungstabellen, die für diskrete Werte Zuordnungen unterschiedlicher Größen enthalten, auch Funktionen, etwa durch Angabe von Koeffizienten von Polynomen höherer Grade, hinterlegt sein. Dies wird im folgenden anhand der in den Figuren 5 bis 7 gezeigten Graphen erläutert.

**Tabelle 2**

| Abstand d [$\mu$m] | Wellenlänge $\lambda$ [nm] |
|---|---|
| ... | ... |
| $d_{k-1}$ | $\lambda_{k-1}$ |
| $d_k$ | $\lambda_k$ |
| $d_{k+1}$ | $\lambda_{k+1}$ |
| $d_{k+2}$ | $\lambda_{k+2}$ |
| $d_{k+3}$ | $\lambda_{k+3}$ |
| ... | ... |

Die Figur 5 zeigt qualitativ die funktionale Abhängigkeit des Abstands $d(\lambda)$ von der Wellenlänge $\lambda$, wie sie sich durch Interpolation der während der Kalibrierung des Meßkopfes MK gewonnenen Meßdaten ergibt. In der Figur 6 ist qualitativ die funktionale Abhängigkeit zwischen der Wellenlänge $\lambda(s)$ von dem Pixelort s aufgetragen. Diese Funktion ergibt sich durch Interpolation der während der Kalibrierung des Spektrographen 34 gewonnenen Meßdaten.

In der Figur 7 ist die Funktion

$$d(s) = d(\lambda(s))$$

gezeigt, welche den funktionalen Zusammenhang zwischen den Pixelorten s und den Abständen d wiedergibt. Mit Hilfe der in der Figur 7 gezeigten Funktion kann nun jedem Pixelort s sofort ein Abstand d durch Einsetzen in die vorstehende Funktionsgleichung ermittelt werden. Aufgrund der Vielzahl der in dem CCD-Sensor 50 enthaltenen Pixel $P_i$ ist hierbei angenommen, daß der Pixelort s eine quasikontinuierliche Größe ist.

Soll eine vorhandene Auswerteeinheit AE mit einem neuen Meßkopf MK betrieben werden, so kann auf zweierlei Weise vorgegangen werden. Eine Möglichkeit besteht darin, eine Zuordnungstabelle ähnlich wie die Tabelle 2 oder eine Funktionsgleichung, welche die in der Figur 5 gezeigte Abhängigkeit des Abstandes von der Wellenlänge wiedergibt, auf einem Datenträger zu speichern und zusammen mit dem neuen Meßkopf MK zu der Auswerteeinheit AE zu transportieren. Der Datenträger, bei dem es sich z.B. um ein optisches Speichermedium handeln kann, wird dann in eine Leseeinrichtung 60 (siehe Figur 1) der Auswerteeinheit AE eingeführt, um die darauf enthaltenen Zuordnungsdaten in der Auswerteeinheit AE zu speichern. Gespeichert sind dort bereits die Zuordnungen, die bei der Kalibrierung des Spektrographen 34 gewonnen worden sind. Die Kalibrierungsdaten können dabei z.B. als Tabelle, wie sie ausschnittsweise als Tabelle 1 wiedergegeben ist, oder als Koeffizienten eines Polynoms hinterlegt werden.

Der Recheneinheit 36 der Auswerteeinheit AE stehen nun alle Informationen zur Verfügung, um aus Pixelorten s auf Abstände d zurückschließen zu können. Es ist somit nicht erforderlich, den neuen Meßkopf MK gemeinsam mit der Auswerteeinheit AE zu kalibrieren.

Alternativ hierzu ist es auch möglich, die beiden Zuordnungstabellen oder Zuordnungsfunktionen, die im Rahmen der Kalibrierung des Meßkopfs MK und der Auswerteeinheit AE erstellt wurden, nicht erst in der Auswerteeinheit AE, sondern vorab in einem anderen Rechner zu verknüpfen. Ergebnis einer solchen Verknüpfung ist dann entweder eine Tabelle, in der unmittelbar den Pixelorten s Abstände zugeordnet sind, oder eine Funktion d(s), wie sie in der Figur 7 gezeigt ist. Diese tabellarische oder funktionale Zuordnung wird dann, zusammen mit dem neuen Meßkopf MK, zu der Auswerteeinheit AE transportiert und in diese eingelesen.

Bei dieser zweiten Variante ist von Vorteil, daß in der Auswerteeinheit AE eine Software, die für die gemeinsame Kalibrierung von Meßkopf und Auswerteeinheit AE entwickelt wurde, unverändert übernommen werden kann.

**Patentansprüche**

1. Kalibrierverfahren für ein nach einem Weißlicht-Meßverfahren arbeitendes Meßsystem (10) zur Vermessung von Oberflächen (46, 48), das einen Meßkopf (MK) mit einem chromatisch nicht korrigierten Objektiv (22) und eine lösbar mit dem Meßkopf verbindbare Auswerteeinheit (AE) mit einem Spektrographen (34) umfaßt, der ein von dem Meßkopf (MK) aufgenommenes optisches Signal spektral analysiert,
**dadurch gekennzeichnet, daß**
der Meßkopf (MK) und der Spektrograph (34) getrennt voneinander kalibriert werden.

**2.** Kalibrierverfahren nach Anspruch 1, **dadurch gekennzeichnet, daß** bei der Kalibrierung des Meßkopfes (MK) Abstände zwischen dem Meßkopf (MK) und einer Referenzfläche ersten Bezugsgrößen zugeordnet werden, und daß bei der Kalibrierung des Spektrographen (34) Ausgangssignale des Spektrographen zweite Bezugsgrößen zugeordnet werden.

**3.** Kalibrierverfahren nach Anspruch 2, **dadurch gekennzeichnet, daß** die ersten Bezugsgrößen über eine Funktion eindeutig den zweiten Bezugsgrößen zugeordnet werden.

**4.** Kalibrierverfahren nach Anspruch 2, **dadurch gekennzeichnet, daß** bei der Kalibrierung des Meßkopfes (MK) und der Kalibrierung des Spektrographen (34) die gleichen Bezugsgrößen verwendet werden.

**5.** Kalibrierverfahren nach Anspruch 4, **dadurch gekennzeichnet, daß** die Bezugsgrößen Wellenlängen sind.

**6.** Kalibrierverfahren nach einem der Ansprüche 2 bis 5, **dadurch gekennzeichnet, daß** bei der Kalibrierung des Meßkopfes (MK) eine Zuordnung zwischen Abständen und ersten Bezugsgrößen als Tabelle oder als Funktion gespeichert wird.

**7.** Kalibrierverfahren nach einem der Ansprüche 2 bis 6, **dadurch gekennzeichnet, daß** bei der Kalibrierung des Spektrographen (34) eine Zuordnung zwischen Ausgangssignalen des Spektrographen (34) und zweiten Bezugsgrößen als Tabelle oder als Funktion gespeichert wird.

**8.** Kalibrierverfahren nach einem der Ansprüche 2 bis 7, **dadurch gekennzeichnet, daß** Zuordnungen von Abständen zu ersten Bezugsgrößen sowie Zuordnungen zwischen Ausgangssignalen des Spektrographen zu zweiten Bezugsgrö-ßen jeweils auf externen Datenträgern gespeichert werden.

**9.** Kalibrierverfahren nach einem der Ansprüche 2 bis 8, **dadurch gekennzeichnet, daß** vor oder während des Betriebs des Meßsystems (10) die Ausgangssignale des Spektrographen (34) über die ersten und die zweiten Bezugsgrößen Abständen zugeordnet werden.

**10.** Kalibrierverfahren nach Anspruch 9, **dadurch gekennzeichnet, daß** der Auswerteeinheit (AE) vor der Inbetriebnahme des Meßsystems (10) eine Zuordnung zwischen Abständen und ersten Bezugsgrößen übermittelt wird.

**11.** Kalibrierverfahren nach Anspruch 9, **dadurch gekennzeichnet, daß** der Auswerteeinheit (AE) vor der Inbetriebnahme des Meßsystems (10) eine Zuordnung zwischen Abständen und Ausgangssignalen des Spektrographen (34) übermittelt wird.

**12.** Kalibrierverfahren nach einem der Ansprüche 2 bis 11, **dadurch gekennzeichnet, daß** die Ausgangssignale des Spektrographen (34) Informationen enthalten, an welchem Ort während einer Messung ein Intensitätsmaximum auftritt.

**13.** Nach einem Weißlicht-Meßverfahren arbeitendes Meßsystem zur Vermessung von Oberflächen (46, 48), umfassend einen Meßkopf (MK) mit einem chromatisch nicht korrigierten Objektiv (22) und eine lösbar mit dem Meßkopf verbindbare Auswerteeinheit (AE), die einen Spektrographen (34) enthält, der eine von dem Meßkopf (MK) aufgenommenes optisches Signal spektral analysiert,
**dadurch gekennzeichnet, daß**
die Auswerteeinheit ferner enthält:

   - einen Dateneingang (60), über den im Gebrauch der Auswerteeinheit (AE) eine Zuordnung von Abständen zwischen dem Meßkopf (MK) und einer Referenzfläche zu ersten Bezugsgrößen zugeführt wird,
   - einen Datenspeicher, in dem eine Zuordnung von Orten im Spektrographen (34), an denen während einer Messung ein Intensitätsmaximum auftreten kann, zu zweiten Bezugsgrößen gespeichert ist, und
   - eine Recheneinheit (36), die dazu eingerichtet ist vor der Inbetriebnahme des Meßsystems die Orte im Spektrographen (34) über die zugeführten ersten und die gespeicherten zweiten Bezugsgrößen Abständen zuzuordnen.

**14.** Meßsystem nach Anspruch 13, **dadurch gekennzeichnet, daß** der Meßkopf eine Lichtquelle (12) zur Erzeugung von Licht mit einem kontinuierlichen Spektrum und eine der Lichtquelle zugeordnete Lichtaustrittsfläche (24) umfaßt, wobei das Objektiv (22) die Lichtaustrittsfläche in wellenlängenabhängigen Brennebenen abbildet.

**15.** Meßsystem nach Anspruch 13 oder 14, **dadurch gekennzeichnet, daß** durch den Spektrographen (34) die spektrale Intensitätsverteilung von Licht erfaßbar ist, das durch das Objektiv (22) hindurch auf den zu vermessenden Körper (GR) gerichtet und von einer dem Objektiv (22) zugewandten Grenzfläche (46, 48) des Körpers reflektiert wird.

**16.** Meßsystem nach einem der Ansprüche 13 bis 15, **dadurch gekennzeichnet, daß** sich mit der Recheneinheit (36) jeder Wellenlänge, bei der die von dem Spektrographen (34) erfaßte Intensitätsverteilung ein lokales Maximum hat, ein Abstand zwischen dem Objektiv (22) und einer reflektierenden Grenzfläche zuordnen läßt.

## Claims

1. Calibration method for a measurement system (10) operating according to a white light measurement method for inspecting surfaces (46, 48), which comprises a measurement head (MK) with a chromatically uncorrected objective (22) and, releasably connectable to the measurement head, an evaluation unit (AE) with a spectrograph (34) which spectrally analyses an optical signal recorded by the measurement head (MK),
**characterised in that**
the measurement head (MK) and the spectrograph (34) are calibrated separately from one another.

2. Calibration method according to Claim 1, **characterised in that** distances between the measurement head (MK) and a reference surface are allocated to first reference quantities during the calibration of the measurement head (MK), and **in that** output signals of the spectrograph are allocated to second reference quantities during the calibration of the spectrograph (34).

3. Calibration method according to Claim 2, **characterised in that** the first reference quantities are allocated uniquely to the second reference quantities via a function.

4. Calibration method according to Claim 2, **characterised in that** the same reference quantities are used during the calibration of the measurement head (MK) and the calibration of the spectrograph (34).

5. Calibration method according to Claim 4, **characterised in that** the reference quantities are wavelengths.

6. Calibration method according to one of Claims 2 to 5, **characterised in that** an allocation between distances and first reference quantities is stored as a table or as a function during the calibration of the measurement head (MK).

7. Calibration method according to one of Claims 2 to 6, **characterised in that** an allocation between output signals of the spectrograph (34) and second reference quantities is stored as a table or as a function during the calibration of the spectrograph (34).

8. Calibration method according to one of Claims 2 to 7, **characterised in that** allocations of distances to first reference quantities as well as allocations between output signals of the spectrograph to second reference quantities are respectively stored on external data media.

9. Calibration method according to one of Claims 2 to 8, **characterised in that** the output signals of the spectrograph (34) are allocated, via the first and second reference quantities, to distances before or during the operation of the measurement system (10).

10. Calibration method according to Claim 9, **characterised in that** an allocation between distances and first reference quantities is communicated to the evaluation unit (AE) before first use of the measurement system (10).

11. Calibration method according to Claim 9, **characterised in that** an allocation between distances and output signals of the spectrograph (34) is communicated to the evaluation unit (AE) before first use of the measurement system (10).

12. Calibration method according to one of Claims 2 to 11, **characterised in that** the output signals of the spectrograph (34) contain information about the position at which an intensity maximum occurs during a measurement.

13. Measurement system operating according to a white light measurement method for inspecting surfaces (46, 48), comprising a measurement head (MK) with a chromatically uncorrected objective (22) and, releasably connectable to the measurement head, an evaluation unit (AE) with a spectrograph (34) which spectrally analyses an optical signal recorded by the measurement head (MK),
**characterised in that**
the evaluation unit furthermore contains:

   - a data input (60) via which an allocation of distances, between the measurement head (MK) and a reference surface, to first reference quantities is supplied to the evaluation unit (AE) during use,
   - a data memory in which an allocation of positions in the spectrograph (34), at which an intensity maximum are able to occur during a measurement, to second reference quantities is stored, and
   - a computation unit (36) which is designed to allocate the positions in the spectrograph (34), via the supplied first and the stored second reference quantities, to distances before first use of the measurement system.

14. Measurement system according to Claim 13, **characterised in that** the measurement head comprises a light source (12) for generating light with a continuous spectrum and a light exit surface (24) allocated to the light source, the objective (22) imaging the light exit surface into wavelength-dependent focal planes.

15. Measurement system according to Claim 13 or 14, **characterised in that** the spectrograph (34) can record the spectral intensity distribution of light which is directed through the objective (22) onto the body (GR) to be inspected and is reflected by an interface (46, 48) of the body facing the objective (22)

16. Measurement system according to one of Claims 13 to 15, **characterised in that** the computation unit (36) can allocate a distance between the objective (22) and a reflecting interface to each wavelength at which the intensity distribution recorded by the spectrograph (34) has a local maximum.

## Revendications

1. Procédé de calibrage d'un système de mesure (10) fonctionnant selon un procédé de mesure en lumière blanche pour la mesure de surfaces (46, 48), qui comprend une tête de mesure (MK) avec un objectif (22) non corrigé chromatiquement et une unité d'évaluation (AE) pouvant être reliée à la tête de mesure de manière amovible, contenant un spectrographe (34) qui analyse spectralement un signal optique enregistré par la tête de mesure (MK), **caractérisé par le fait que** la tête de mesure (MK) et le spectrographe (34) sont calibrés séparément l'un de l'autre.

2. Procédé de calibrage selon la revendication 1, **caractérisé par le fait que** lors du calibrage de la tête de mesure (MK), des distances entre la tête de mesure (MK) et une surface de référence sont associées à de premières grandeurs de référence et que lors du calibrage du spectrographe (34) des signaux de sortie du spectrographe sont associés à de secondes grandeurs de référence.

3. Procédé de calibrage selon la revendication 2, **caractérisé par le fait que** les premières grandeurs de référence sont associées de manière univoque aux secondes grandeurs de référence par une fonction.

4. Procédé de calibrage selon la revendication 2, **caractérisé par le fait que** l'on utilise les mêmes grandeurs de référence lors du calibrage de la tête de mesure (MK) et du calibrage du spectrographe (34).

5. Procédé de calibrage selon la revendication 4, **caractérisé par le fait que** les grandeurs de référence sont des longueurs d'onde.

6. Procédé de calibrage selon l'une des revendications 2 à 5, **caractérisé par le fait que** lors du calibrage de la tête de mesure (MK), on enregistre une association entre distances et premières grandeurs de référence sous forme de tableau ou sous forme de fonction.

7. Procédé de calibrage selon l'une des revendications 2 à 6, **caractérisé par le fait que** lors du calibrage du spectrographe (34), on enregistre une association entre signaux de sortie du spectrographe (34) et secondes grandeurs de référence sous forme de tableau ou sous forme de fonction.

8. Procédé de calibrage selon l'une des revendications 2 à 7, **caractérisé par le fait que** des associations de distances à de premières grandeurs de référence ainsi que des associations entre signaux de sortie du spectrographe et secondes grandeurs de référence sont enregistrées chaque fois sur des supports de données externes.

9. Procédé de calibrage selon l'une des revendications 2 à 8, **caractérisé par le fait qu'**avant ou pendant le fonctionnement du système de mesure (10), les signaux de sortie du spectrographe sont associés à des distances au moyen des premières et secondes grandeurs de référence.

10. Procédé de calibrage selon la revendication 9, **caractérisé par le fait qu'**une association entre distances et premières grandeurs de référence est transmise à l'unité d'évaluation (AE) avant la mise en service du système de mesure (10).

11. Procédé de calibrage selon la revendication 9, **caractérisé par le fait qu'**une association entre distances et signaux de sortie du spectrographe (34) est transmise à l'unité d'évaluation (AE) avant la mise en service du système de mesure (10).

12. Procédé de calibrage selon l'une des revendications 2 à 11, **caractérisé par le fait que** les signaux de sortie du spectrographe (34) contiennent des informations indiquant à quel lieu il apparaît un maximum d'intensité pendant la mesure.

13. Système de mesure fonctionnant selon un procédé de mesure en lumière blanche pour la mesure de surfaces (46, 48), comprenant une tête de mesure (MK) avec un objectif (22) non corrigé chromatiquement et une unité d'évaluation (AE) pouvant être reliée à la tête de mesure de manière amovible, qui contient un spectrographe (34) qui analyse spectralement un signal optique enregistré par la tête de mesure (MK), **caractérisé par le fait que** l'unité d'évaluation contient également :

- une entrée de données (60) par laquelle, en utilisation, une association de distances entre la tête de mesure (MK) et une surface de référence à de premières grandeurs de référence est amenée à l'unité d'évaluation (AE),
- une mémoire de données dans laquelle une association de lieux dans le spectrographe (34) où un maximum d'intensité peut apparaître pendant la mesure à de secondes grandeurs de référence est enregistrée et
- une unité de calcul (36) qui est conçue pour, avant la mise en service du système de mesure, associer les lieux dans le spectrographe (34) à des distances au moyen des premières grandeurs de référence amenées et des secondes grandeurs de référence enregistrées.

**14.** Système de mesure selon la revendication 13, **caractérisé par le fait que** la tête de mesure comprend une source de lumière (12) pour la génération de lumière ayant un spectre continu et une surface de sortie de lumière (24) associée à la source de lumière, l'objectif (22) reproduisant la surface de sortie de lumière dans des plans focaux dépendants de la longueur d'onde.

**15.** Système de mesure selon la revendication 13 ou 14, **caractérisé par le fait que** le spectrographe (34) permet de saisir la distribution d'intensité spectrale de la lumière qui est dirigée sur le corps à mesurer (GR) à travers l'objectif (22) et réfléchie par une surface limite (46, 48) du corps tournée vers l'objectif (22).

**16.** Système de mesure selon l'une des revendications 13 à 15, **caractérisé par le fait que** l'unité de calcul (36) permet d'associer à chaque longueur d'onde à laquelle la distribution d'intensité saisie par le spectrographe (34) présente un maximum local une distance entre l'objectif (22) et une surface limite réfléchissante.

**Fig. 1**

Fig. 2

Fig. 3

Fig. 4

d(λ)

Fig. 5

λ(s)

s

Fig. 6

d(s)

s

Fig. 7